# EUROPÄISCHE PATENTANMELDUNG

(11) **EP 0 854 081 A2**
(43) Veröffentlichungstag der Anmeldung: **22.07.1998**
(21) Anmeldenummer: 97118784.4
(22) Anmeldetag: 29.10.1997
(51) Int. Cl.: B63B 21/20, F16F 15/06

(54) **Verbinder zwischen Anker und Kette**

(30) Priorität: 16.01.1997 DE 19701140
(71) Anmelder: Wagener & Simon WASI GmbH & Co. KG, 42289 Wuppertal (DE)
(72) Erfinder: Simon, Werner, 58566 Kierspe (DE)
(74) Vertreter: Mentzel, Norbert, Dipl.-Phys.

(57) **Zusammenfassung**

Der Grundkörper(16) eines Verbinders (15) zwischen Anker (14,20) und Kette (12) von Schiffen, insbesondere Segelbooten und Jachten weist am einen Ende eine Aufnahmegabel (19) für den Ankerschaft (20) und am anderen Ende einen Gabelteil (21) zur Aufnahme eines Kettengliedes auf. Die Schenkel (22,23) der Aufnahmegabel (19) und auch die Schenkel (29,30) des Gabelteiles (21) sind von jeweils einem Schraubenbolzen (24,31) durchdrungen, der einerseits mit seinem Kopf (27,32) im einen Schenkel (22,29) und mit seinem Gewindeschaft (28,33) im anderen Schenkel (23,30) festgelegt ist.

Zur Unverlierbarkeit des Ankers (14,20) von der Ankerkette (12) ist jeder Schraubenbolzen (24,31) durch ein Sicherungsglied (34) an wenigstens einem Schenkel (22,23,29,30) des Grundkorpers (16) des Verbinders (15) zusätzlich festgelegt.

## Beschreibung

Die Erfindung betrifft einen Verbinder zwischen Anker und Kette von Schiffen, insbesondere Segelbooten und Jachten, dessen langgestreckter Grundkörper am einen Ende eine Aufnahmegabel für den Ankerschaft und am anderen Ende einen Gabelteil zur Aufnahme eines Kettengliedes aufweist, wobei die Schenkel der Aufnahmegabel und auch die Schenkel des Gabelteiles von jeweils einem Schraubenbolzen durchdrungen sind, der einerseits mit seinem Kopf im einen Schenkel und mit seinem Gewindeschaft im anderen Schenkel festgelegt ist.

In der Regel sind die vorbekannten Verbinder der eingangs genannten Art zylinderförmig gestaltet und weisen eine Länge auf, die etwa dem 3- bis 4-fachen ihres Durchmessers entspricht. An beiden Enden dieses langgestreckten, zylinderförmigen Grundkörpers sind in Längsrichtung verlaufende Schlitze eingebracht, wodurch am einen Ende eine Aufnahmegabel für den Ankerschaft und am anderen Ende ein Gabelteil zur Aufnahme der Ankerkette gebildet ist. Die Schenkel der Aufnahmegabel sind von einer fluchtenden Bohrung durchdrungen, wovon im einen Schenkel eine zur Aufnahme eines Schraubenkopfes abgesetzte Bohrung angeordnet ist, während sich im gegenüberliegenden Schenkel eine Gewindebohrung befindet. Der zwischen die Schenkel der Aufnahmegabel eingeführte Ankerschaft besitzt ebenfalls eine Bohrung durch welche der Schraubenbolzen hindurchgreift und mit seinem Gewindeschaftteil in die Gewindebohrung im einen Schenkel der Aufnahmegabel eingeschraubt ist. Das letzte, dem Anker zugekehrte Glied der Ankerkette ist in gleicher Weise am Gabelteil des Verbindergrundkörpers befestigt. Auch hier ist ein Schraubenbolzen mit seinem Gewindeschaft im einen Schenkel des Gabelteiles eingeschraubt. Wenn nun der Anker ausgebracht ist und das Schiff über die Kette am Anker hängt, so kann es durch Strömungsverhältnisse zu Bewegungen des Schiffs- bzw. Bootskörpers kommen, die schlimmstenfalls dazu führen können, dass sich einer der Schraubenbolzen aus der Gewindebohrung eines Schenkels löst, wodurch der Anker von der Kette abfällt und das Schiff bzw. das Segelboot zum Spielball von Gezeiten, Wellen und Strömungen wird. Dadurch kann das Schiff bzw. das Segelboot oder die Jacht und schlimmer noch die darauf befindlichen Menschen gefährdet werden.

Aufgabe der Erfindung ist es einen Verbinder derart auszugestalten, dass die Verlierbarkeit des Ankers praktisch ausgeschlossen werden kann. Zur Lösung dieser Aufgabe wird vorgeschlagen, dass jeder Schraubenbolzen durch ein Sicherungsglied an wenigstens einem Schenkel des Grundkörpers zusätzlich festgelegt ist. Dies kann auf vielerlei Arten verwirklicht werden. Beispielsweise könnte die Gewindebohrung durch einen Achshalter überbrückt sein, der über eine in den Gewindeschaft des Schraubenbolzens eingedrehte Schraube festgelegt ist Dabei wäre zur Schaffung eines glattwandigen Außenmantels dieser Achshalter in den die Gewindebohrung aufweisenden Schenkel vorteilhaft einzutiefen Dies würde allerdings die Abmessungen des Grundkörpers des Verbinders vergrößern Dies wäre auch dann der Fall, wenn der Kopf des Schraubenbolzens von einem Achshalter überbrückt wäre. Daher wird nach einer bevorzugten Ausgestaltung der Erfindung vorgeschlagen, dass als Sicherungsglied ein Gewindestift eingesetzt ist, der von der Stirnseite des Schenkels her in diesen zur Verklemmung des Schraubenbolzens eingeschraubt ist. Dabei mag zur Sicherung gegen Verdrehen des Schraubenbolzens dieser wenigstens eine Aufnahme für einen Klemmvorsprung des Gewindestiftes aufweisen. Dieser Klemmvorsprung des Gewindestiftes kann vorteilhaft als Kegelspitze ausgebildet sein, während in diesem Fall die Aufnahme als V-förmige Rille unterhalb des Schraubenkopfes den Schaft des Schraubenbolzens umrundet Dadurch ist sichergestellt, dass ohne Entfernung des Gewindestiftes der Schraubenbolzen mit seinem Gewindeschaft sich nicht aus der Gewindebohrung im einen Schenkel der Aufnahmegabel bzw. des Gabelteiles lösen kann. Schließlich wäre es auch noch möglich, die unbeabsichtigte Lösung des Gewindestiftes dadurch zu unterbinden, dass der Gewindestift im Bereich seines dem Klemmvorsprung gegenüberliegenden Schaftteiles von einem elastisch verformbaren Sicherungsring umfasst ist, der in der den Gewindeschaft aufnehmenden Gewindebohrung im Schenkel des Grundkörpers beim Einschrauben verklemmt.

Die Erfindung ist in einem Ausführungsbeispiel auf der Zeichnung dargestellt und wird nachfolgend näher erläutert. Es zeigen:
- Fig. 1: die Verankerungslage eines Schiffskörpers am Gewässergrund in schematischer Darstellung, wobei die am Schiff gehalterte Ankerkette am Anker über den Verbinder gehaltert ist,
- Fig. 2: den Verbinder in einer teilweise aufgebrochenen und im Schnitt dargestellten Seitenansicht in gegenüber Fig. 1 vergrößertem Maßstab, wobei der Ankerschaft und die Kette in strichpunktierten Linien dargestellt sind,
- Fig. 3: eine Stirnansicht auf den Verbinder in Richtung des Pfeiles III von Fig. 2.

Der Schiffs- bzw. Bootskörper 10 weist in bekannter Weise einen Ankerkasten 11 auf, aus dem die Ankerkette 12 über eine Haspel 13 mit Kettennuss abgewickelt und auch wieder eingezogen werden kann. Das Ende der Ankerkette 12 ist an den Anker 14 über einen Verbinder 15 angeschlossen, der zweckmäßigerweise aus Edelstahl gefertigt und derart dimensioniert ist, dass Zugkräfte in der gewünschten Höhe aufgenommen werden können.

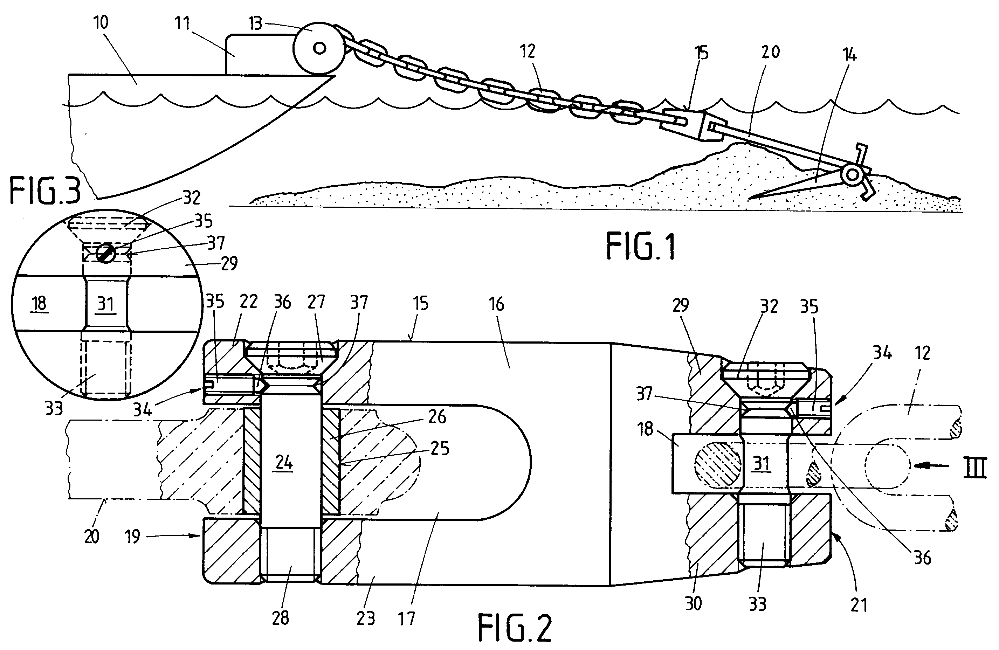

Der Verbinder ist am besten aus den Fig. 2 und 3 erkennbar, und besteht bei dem dargestellten Ausführungsbeispiel aus einem zylindrischen, langgestreckten Grundkörper 16, der an seinen beiden Enden Schlitze 17 und 18 aufweist, wovon der Schlitz 17 im Grundkörper 16 eine Aufnahmegabel 19 für den Ankerschaft 20 bildet, während der Schlitz 18 einen Gabelteil 21 zur Aufnahme eines Kettengliedes der Ankerkette 12 bildet.

Die Schenkel 22 und 23 der Aufnahmegabel 19 werden von einem Schraubenbolzen 24 durchquert, der mit seinem Schaft auch die Bohrung 25 des in den Schlitz 17 eingeschobenen Ankerschaftes 20 durchquert Dabei mag zwischen den Schaft des Schraubenbolzens 24 und die Bohrung 25 des Ankerschaftes eine Buchse 26 geschaltet sein Während der Schenkel 22 der Aufnahmegabel 19 den Schraubenkopf 27 des Schraubenbolzens 24 aufnimmt, ist der Gewindeschaftteil 28 des Schraubenbolzens 24 in ein Gewindeloch im Schenkel 23 der Aufnahmegabel 19 eingeschraubt.

Analog dazu werden auch die Schenkel 29 und 30 des Gabelteiles 21 von einem Schraubenbolzen 31 durchdrungen, dessen Schraubenkopf 32 vom Schenkel 29 aufgenommen wird, während der Gewindeschaftteil 33 des Schraubenbolzens 31 in ein Gewindeloch im Schenkel 30 des Gabelteiles 21 eingedreht ist. Der im Schlitz 18 befindliche Schaftteil des Schraubenbolzens 31 durchdringt ein in den Schlitz zuvor eingeschobenes Kettenglied der Ankerkette 12 und verbindet auf diese Weise die Ankerkette 12 mit dem Ankerschaft 20.

Um die Unverlierbarkeit des Ankers zu gewährleisten ist jedem Schraubenbolzen 24 bzw. 31 ein Sicherungsglied 34 zugeordnet, das bei dem dargestellten Ausführungsbeispiel aus einem Gewindestift 35 besteht. Dieser Gewindestift 35 weist einen Klemmvorsprung 36 auf, der in eine Aufnahme 37 am Schaft jeden Schraubenbolzens 24, 31 eindringen kann. Dabei mag - wie aus dem dargestellten Ausführungsbeispiel ersichtlich ist - die Aufnahme 37 als V-förmige Rille gestaltet sein, während der Klemmvorsprung 36 jeden Gewindestiftes 35 als Kegelspitze ausgebildet sein mag. Wie aus Fig. 2 zu erkennen ist, sind die Gewindestifte 35 in Gewindebohrungen in den Schenkeln 22 und 29 von den Stirnseiten der Schenkel her eingedreht, wobei die Gewindebohrungen für die Gewindestifte 35 derart plaziert sind, dass sie mit der Lage der Aufnahmen 37 nach dem Eindrehen der Schraubenbolzen 24 bzw. 31 übereinstimmen. Dabei kann die Länge der Gewindestifte 35 derart gewählt sein, dass diese bei ordnungsgemäßem Sitz in den Schenkeln 22 und 29 mit den Stirnseiten des Grundkörpers 16 abschließen, so dass eine Sichtkontrolle über die ordnungsgemäße Sicherung der Schraubenbolzen 24 und 31 gewährleistet ist.

Wie bereits erwähnt, gibt die dargestellte und vorbeschriebene Ausführungsform die Erfindung nur beispielsweise wieder, die keinesfalls allein darauf beschränkt ist Es sind vielmehr noch Änderungen und weitere Ausgestaltungen des Erfindungsgegenstandes denkbar. Außerdem sind alle aus der Beschreibung und den Zeichnungen ersichtlichen Merkmale erfindungswesentlich, auch wenn sie nicht ausdrücklich beansprucht sind.

### Bezugszeichenliste :

- 10: Schiffs-, Bootskörper
- 11: Ankerkasten
- 12: Ankerkette
- 13: Haspel
- 14: Anker
- 15: Verbinder
- 16: Grundkörper
- 17: Schlitz
- 18: Schlitz
- 19: Aufnahmegabel
- 20: Ankerschaft
- 21: Gabelteil
- 22: Schenkel, von 19
- 23: Schenkel, von 19
- 24: Schraubenbolzen
- 25: Bohrung, in 20
- 26: Buchse
- 27: Schraubenkopf, von 24
- 28: Gewindeschaftteil, von 24
- 29: Schenkel, von 21
- 30: Schenkel, von 21
- 31: Schraubenbolzen
- 32: Schraubenkopf
- 33: Gewindeschaftteil
- 34: Sicherungsglied
- 35: Gewindestift
- 36: Klemmvorsprung
- 37: Aufnahme

## Patentansprüche

1. Verbinder zwischen Anker und Kette von Schiffen, insbesondere Segelbooten und Jachten, dessen langgestreckter Grundkörper am einen Ende eine Aufnahmegabel für den Ankerschaft und am anderen Ende einen Gabelteil zur Aufnahme eines Kettengliedes aufweist, wobei die Schenkel der Aufnahmegabel und auch die Schenkel des Gabelteiles von jeweils einem Schraubenbolzen durchdrungen sind, der einerseits mit seinem Kopf im einen Schenkel und mit seinem Gewindeschaft im anderen Schenkel festgelegt ist,
**dadurch gekennzeichnet,**
dass jeder Schraubenbolzen (24, 31) durch ein Sicherungsglied (34) an wenigstens einem Schenkel (22, 29) des Grundkörpers (16) zusätzlich festgelegt ist.

2. Verbinder nach Anspruch 1, dadurch gekennzeichnet, dass als Sicherungsglied (34) ein Gewindestift (35) eingesetzt ist, der von der Stirnseite des Schenkels (22, 29) her in diesen zur Verklemmung des Schraubenbolzens (24, 31) eingeschraubt ist.

3. Verbinder nach Anspruch 1 und/oder 2, dadurch gekennzeichnet, dass der Schraubenbolzen (24, 31) wenigstens eine Aufnahme (37) für einen Klemmvorsprung (36) des Gewindestiftes (35) aufweist.

4. Verbinder nach Anspruch 3, dadurch gekennzeichnet, dass der Klemmvorsprung (36) als Kegelspitze ausgebildet ist und die Aufnahme (37) als V-förmige Rille unterhalb des Schraubenkopfes (27, 32) den Schaft des Schraubenbolzens (24, 31) umrundet.

5. Verbinder nach einem der vorhergehenden Ansprüche, dadurch gekennzeichnet, dass der Gewindestift (35) im Bereich seines dem Klemmvorsprung (36) gegenüberliegenden Schaftteiles von einem elastisch verformbaren Sicherungsring umfasst ist, der in der den Gewindestift (35) aufnehmenden Gewindebohrung im Schenkel (22, 29) des Grundkörpers (16) beim Einschrauben verklemmbar ist.
